# EUROPEAN PATENT APPLICATION

(11) **EP 3 021 207 A1**
(43) Date of publication of application: **18.05.2016**
(21) Application number: 15193704.2
(22) Date of filing: 09.11.2015
(51) Int. Cl.: G06F 3/0488, H04M 1/60

(54) **PORTABLE ELECTRONIC DEVICE INCLUDING TOUCH-SENSITIVE DISPLAY AND METHOD OF CONTROLLING AUDIO OUTPUT**

(30) Priority: 12.11.2014 US 201414539854
(71) Applicant: BlackBerry Limited, Waterloo, ON N2K 0A7 (CA)
(72) Inventor: HAWKER, Larry Edward, Waterloo, Ontario N2T 2W6 (CA); ISMAIL, Mohamed, Waterloo, Ontario N2J 3B8 (CA)
(74) Representative: Moore, Barry

(57) **Abstract**

A method of controlling audio output from a portable electronic device having a touch-sensitive display includes detecting a touch with an ear on the touch-sensitive display when the portable electronic device is in an audio output mode in which audio is output through a speaker of the portable electronic device, identifying a location of the touch and magnitude of touch signals utilizing signals received from touch sensors of the touch-sensitive display during detecting the touch, and, based on the identified location and magnitude of the touch signals, adjusting audio output from the speaker.

## Description

### FIELD OF TECHNOLOGY

The present disclosure relates to electronic devices including, but not limited to, portable electronic devices and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. A touch-sensitive input device, such as a touchscreen display, is particularly useful on handheld devices, which are small and may have limited space for user input and output.

Improvements in electronic devices with touch-sensitive displays are desirable.

### BRI EF DESCRIPTION OF THE DRAWINGS

Embodiments of the present disclosure will now be described, by way of example only, with reference to the attached figures, in which:
FIG. 1 is a block diagram of an example of a portable electronic device in accordance with the disclosure;
Fig. 2 is a flowchart illustrating a method of controlling audio output from the portable electronic device of FIG. 1 in accordance with the disclosure;
FIG. 3 is a flowchart illustrating an alternative method of controlling audio output from the portable electronic device of FIG. 1 in accordance with the disclosure.

### DETAILED DESCRIPTION

The following describes an electronic device and a method of controlling audio output from a portable electronic device having a touch-sensitive display. The method includes detecting a touch on the touch-sensitive display when the portable electronic device is in an audio output mode in which audio is output through a speaker of the portable electronic device, identifying a location of the touch and magnitude of touch signals utilizing signals received from touch sensors of the touch-sensitive display during detecting the touch, and, based on the identified location and magnitude of the touch signals, adjusting audio output from the speaker.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile wireless communication devices such as cellular phones, smart phones, wireless organizers, personal digital assistants, media players, wirelessly enabled notebook computers, tablet computers, mobile internet devices, electronic navigation devices, cordless phones, or Voice over Internet Protocol (VoIP) phones, and so forth.

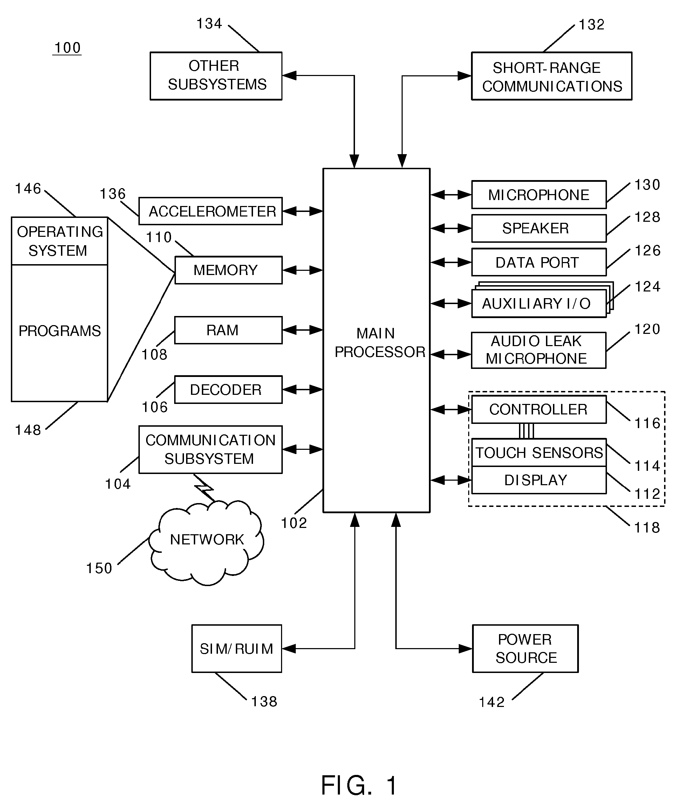

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, an auxiliary input/output (I/O) subsystem 124, a data port 126, a speaker 128, a microphone 130, short-range communications 132 and other device subsystems 134. The processor 102 may also interact with an audio leak microphone 120, also known as an acoustic leak microphone, to determine the audible signal from the speaker 128. The audio leak microphone 120 is sufficiently close in proximity to the speaker 128 to receive output signals that are a reasonable facsimile to signals that would be measured at the ear cavity itself, when the portable electronic device 100 is located against a user's ear with the speaker 128 positioned against the ear. The audio leak microphone 120 may be utilized in determining a degree of seal between the portable electronic device and the user's ear.

The speaker 128, also referred to as an earpiece speaker, is utilized to output audible signals when a user's ear is very close to the speaker 128. Multiple speakers may also be utilized. Although not shown, the processor may also interact with a loudspeaker, for example, for handsfree use. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces. As used in this disclosure, "a" and "an" mean "at least one."

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 is a mutual capacitance touch-sensitive display that includes a plurality of capacitive touch sensors 114. The capacitive touch sensors include drive electrodes, also known as transmission electrodes, and sense electrodes, also known as receive electrodes. The drive electrodes generally extend in one direction and cross over or under the sense electrodes, which generally extend in another direction, generally at right angles to the direction that the drive electrodes extend, to form a grid pattern. The drive electrodes are spaced from the sense electrodes by a dielectric material. The points at which the drive electrodes and the sense electrodes cross each other are referred to as nodes. The drive and sense electrodes may comprise any suitable material, such as indium tin oxide (ITO).

One or more touches, also known as touch contacts or touch events, may be detected by the touch-sensitive display 118. In addition to location of the touch, the processor 102 may determine other attributes of the touch, including data for an area of contact and data for a point at or near a center of the area of contact. The location of a detected touch may include x and y components, e.g., horizontal and vertical components, respectively, with respect to one's view of the touch-sensitive display 118. Multiple simultaneous touches may be detected.

To detect touches, a voltage is applied to the drive electrodes. An input member such as a finger, thumb, other appendage or body part, such as an ear or cheek, or other conductive object, for example, a stylus, pen, or other pointer, near the surface of the touch-sensitive display changes the local electric field, which reduces the mutual capacitance at the nodes of the touch-sensitive display. When a scan of the electrodes of the touch-sensitive display 118 is performed to detect touches, a voltage is applied to each drive electrode while receiving signals from each sense electrode. The capacitance change at each node of the grid may be determined to identify the touch location and the magnitude of the signal by measuring the voltage across the sense electrodes.

The magnitude of the touch signals, also referred to herein as touch signal magnitude, and also known as the strength of the signals, is a value representative of the magnitude of the signal received by the controller 116 from each of the sense electrodes when a touch occurs. A signal magnitude or numerical value is measured for each associated node of the touch-sensitive display 118, to obtain a plurality of values that are utilized to determine a location or locations and area or areas of touch.

By repeatedly scanning the electrodes of the touch-sensitive display 118 to detect touches, one or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The touch-sensitive display 118 includes a display area in which information may be displayed, and a non-display area extending around the periphery of the display area. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed in the non-display area. Touch sensors including drive electrodes and sense electrodes may be disposed in the non-display area, which touch sensors may be extended from the touch sensors in the display area or may be distinct or separate touch sensors from the touch sensors in the display area. A touch, including a gesture, may be associated with, i.e., performed on, the display area, the non-display area, or both areas. The touch sensors including the drive electrodes and the sense electrodes may extend across substantially the entire non-display area or may be disposed in only part of the non-display area.

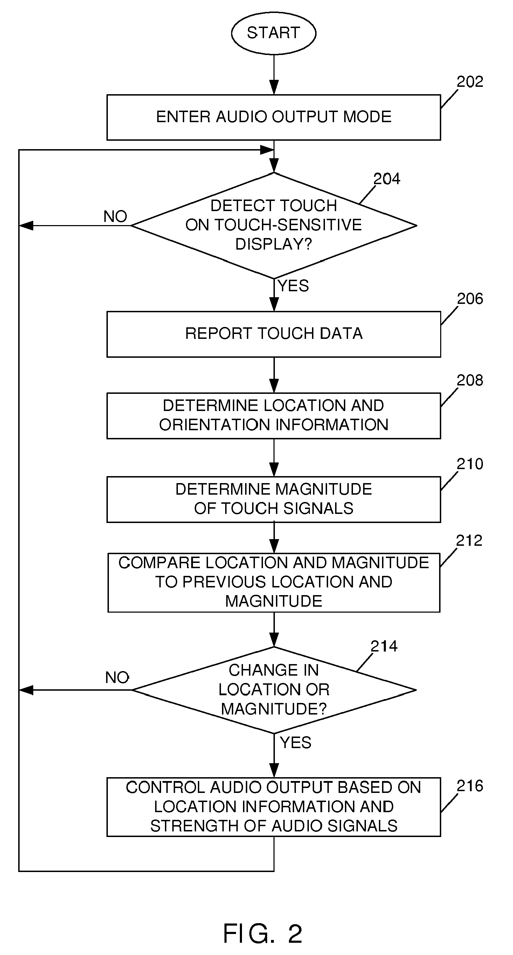

A flowchart illustrating a method of controlling audio output using the touch-sensitive display 118 is shown in FIG. 2. The method may be carried out by software executed, for example, by the processor 102 or both the controller 116 and the processor 102. Coding of software for carrying out such a method is within the scope of a person of ordinary skill in the art given the present description. The method may contain additional or fewer steps than shown and/or described, and may be performed in a different order. Computer-readable code executable by at least one processor of the portable electronic device to perform the method may be stored in a computer-readable storage medium, such as a non-transitory computer-readable medium.

The portable electronic device 100 enters an audio output mode at 202 utilizing the speaker 128 when, for example, a phone call is received or placed from the portable electronic device 100, when voicemail is accessed from the portable electronic device 100, or in any other suitable application. The speaker 128, also referred to as an earpiece speaker, is utilized to output audible signals when a user's ear is very close to the speaker 128.

In response to detecting a touch at 204, the process continues at 206. A touch is detected based on a signal or signals received at the controller 116, from the sense electrodes during a scan or scans of the touch-sensitive display 118. A signal associated with each node is received at the controller.

Touch data is reported at 206 to the processor 102 based on the signals received from the sense electrodes during touch detection. The controller 116 may report the attributes of the touch to the processor 102, including a single or central location of a touch, signal magnitude(s), and contact area. The contact area is the area of contact or contacts of the touch of the ear or cheek or both, with the touch-sensitive display 118. Alternatively, the controller 116 may report raw data signals from the touch sensors 114 of the touch-sensitive display 118 to the processor 102 and the processor 102 may determine touch attributes.

The location and orientation of the touch are determined from the shape of the touch detected at the nodes of the touch-sensitive display 118 and are representative of the location and orientation of the ear relative to the touch-sensitive display 118. To determine location and orientation, the touch data may be compared at 208 to touch data for known locations and orientations, for example, for an average person, to determine relative location of the ear to the speaker 128. For example, the location and orientation may indicate that the ear is generally centered on the speaker 128, is located generally to the right of the speaker 128, to the left of the speaker 128, above the speaker 128, below the speaker 128, or any suitable combination thereof.

A magnitude value, or value representative of the strength or magnitude of the touch signal is determined at 210, which is indicative of how tightly the speaker is held against the ear. The magnitude of the signal is based on the force applied by the ear on the touch-sensitive display. For example, the magnitude of the signal when an ear presses with greater force on the touch-sensitive display is greater than the magnitude of the signal when an ear presses relatively lightly on the touch-sensitive display 118. The difference in magnitude of the signal results from greater capacitive coupling when greater force is applied on the touch-sensitive display 118. Acoustic seal coupling between the speaker and the ear of the user is expected to be better when the force applied by the ear on the touch-sensitive display 118 is greater, which occurs when the portable electronic device 100 is held with greater force against the ear. Higher values of signals therefore may be utilized as an indicator of a better acoustic seal between the speaker and the ear.

When the portable electronic device 100 is held with greater force against the ear of the user, the area of the touch is greater for both the cheek and the lower ear and the maximum touch signal magnitude is higher. Thus, the touch signal magnitude is indicative of the force and the acoustic coupling of the speaker and the seal coupling between the ear and the speaker.

The magnitude value determined at 210 may be a value representative of the magnitude of a plurality of signals, such as an average, a maximum, or any other representative value. For example, the highest or largest value received from sense electrodes during a scan of the touch-sensitive display 118 may be utilized as the magnitude of the touch signal. Alternatively, the controller 116 may filter the signals from a scan of the touch-sensitive display 118 such that signals received during frames of the scan, which correspond to nodes or locations that are near the touch or are within a threshold distance of the center of the touch, are averaged to provide a value of the magnitude of the touch signal. Other processes may be utilized to determine the magnitude of the signal.

At 212, the location and orientation as well as the magnitude of the signal are compared to a previous location and orientation and magnitude of the signal to identify changes in the location and orientation or changes in the magnitude of the signal or both.

In response to detecting a change in the location and orientation or a change in the magnitude of the signal or both a change in the location and orientation as well as magnitude, the process continues from 214 to 216. For example, a determined distance of the center of the ear to the speaker may be compared to a previously determined distance. The previously determined distance may be for example, a distance determined for which output from the speaker 128 was adjusted in the preceding adjustment. Thus, a determined distance may be temporarily stored in memory and utilized to determine a change in location at 214 until the next adjustment of the audio output from the speaker 128. When the next adjustment of the audio output is performed, the associated distance is temporarily stored in memory for determining the change in distance until another adjustment of the audio output is made. In response to determining that the difference meets or exceeds a threshold distance, the process continues from 214 to 216.

A determined magnitude of the touch signals is also compared to a previously determined magnitude of the touch signals. The previously determined magnitude may be for example, a magnitude determined for which output from the speaker 128 was adjusted in the preceding adjustment. Thus, a determined magnitude may be temporarily stored in memory and utilized to determine a change in magnitude at 214 until the next adjustment of the audio output from the speaker 128. When the next adjustment of the audio output is performed, the associated magnitude is temporarily stored in memory for determining change in magnitude until another adjustment of the audio output is made. In response to determining that the difference meets or exceeds a threshold difference in magnitude, the process continues from 214 to 216 where the processes adjust the audio output.

The output from the speaker 128 is adjusted based on the location and orientation of the touch and based on the magnitude of the signal at 216. For example, the processor may utilize a lookup table to identify a loudness level or a frequency response or both loudness level and frequency response based on both a distance, such as a distance of a center of the ear to the speaker, and the magnitude of the signal. The frequency response may be selected, modified or adjusted by changing filter coefficients in the audio digital signal processor (DSP). For example, the processor 102 may select from a plurality of filter coefficients corresponding to different frequency responses based on the information from the touch data, including distance and magnitude of signal. Such selection may be made, for example, utilizing the lookup table.

The process may continue at 204 such that the touch location and orientation and the signal magnitude are repeatedly determined and adjustments made to the audio output in response to a change in the touch location and orientation or the signal magnitude.

For example, a first loudness level and frequency response may be identified when a very good acoustic seal is created between the ear and the speaker 128 and the ear is very close to centered on the speaker. In this example, the distance of the center of the ear from the speaker is very small and the magnitude of the signal is high because force of the portable electronic device 118 against the ear is high. A second loudness level and frequency response may be identified when a poor acoustic seal is created between the ear and the speaker 128 and the ear is not very close to centered on the speaker. In this example, the distance of the center of the ear from the speaker is larger and the magnitude of the signal is relatively low because force of the portable electronic device 118 against the ear is low. To improve audio quality, the second loudness level may be higher than the first loudness level.

The use of a lookup table facilitates adjustment of the audio output for a plurality of different combinations of ear locations and signal magnitudes. Adjustments may alternatively be based on other processes such as a calculation that utilizes both ear location and signal magnitude to identify audio output attributes.

Utilizing the touch-sensitive display, the ear location, relative to the known location of the speaker, and the signal magnitude are determined. Thus, utilizing the touch-sensitive display 118, the determination of how to modify the audio output by the speaker to provide a desirable output for the user is facilitated.

As indicated above, the portable electronic device 100 may include more than one earpiece speaker. Thus, in addition to the speaker 128, another speaker or other speakers may also be utilized to output audible signals when a user's ear is very close to the speaker. The processes described herein are equally applicable to other microphones.

As a result, the speakers may be driven differently, i.e., different signals applied to each speaker, to improve audio performance depending on the ear location and signal magnitude. Optionally, one or more of such speakers may be temporarily disabled, for example, in response to determining that the ear location does not cover the speaker and thus, the speaker is located outside the user's ear. A speaker located outside of the user's ear may cause problems such as loss of privacy because the speaker is not sealed to the ear and is more easily heard by other people in the area, or acoustic feedback with the microphone 130 that is utilized to transmit the user's voice.

According to an alternative process, the location information and signal magnitude may be utilized in conjunction with other information to determine whether to make adjustments to the audio output. For example, the location information and the signal magnitude may be utilized in conjunction with the audio leak microphone 120, which is utilized to determine the audible signal from the speaker 128.

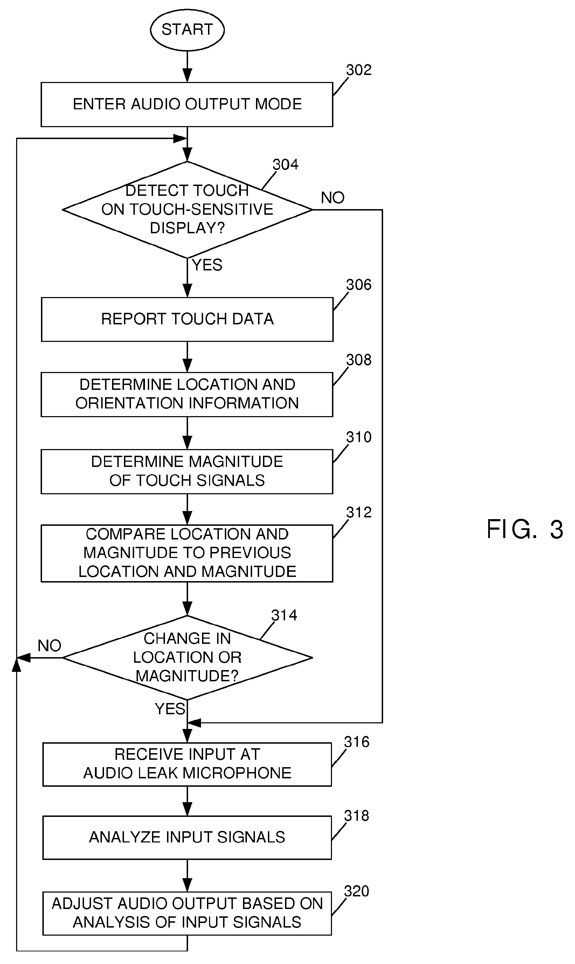

A flowchart illustrating another method of controlling audio output using the touch-sensitive display 118 is shown in FIG. 3. The method may be carried out by software executed, for example, by the processor 102 or both the controller 116 and the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, such as a non-transitory computer-readable medium.

The processes 302 to 314 in FIG. 3 are similar to the processes 202 to 214 illustrated in FIG. 2 and described above and thus, the processes 302 to 314 are not described again in detail herein. In the present example, when a touch is not detected at 304, however, the process may continue at 316.

At 312, the location and orientation as well as the magnitude of the signal are compared to a previous location and orientation and magnitude of the signal to identify changes in the location and orientation or changes in the magnitude of the signal or both.

In response to detecting a change in the location and orientation or a change in the magnitude of the signal or both a change in the location and orientation as well as magnitude, the process continues from 314 to 316. For example, a determined distance of the center of the ear to the speaker may be compared to a previously determined distance. In response to determining that the difference meets or exceeds a threshold distance, the process continues from 314 to 316. A determined magnitude of the touch signals is also compared to a previously determined magnitude of the touch signals. In response to determining that the difference meets or exceeds a threshold difference in magnitude, the process continues from 314 to 316 where the processes adjust the audio output.

Input signals are received at the audio leak microphone 120 at 316. The input signals are received from downlink speech signals, or speech output by the speaker 128. The input signals are a result of audio output or sound pressure levels from the output from the speaker 128.

The input signals are analyzed at 318 by comparing the signals to one or more thresholds and one or more ranges. For example, the audio leak microphone 120 generates voltage signals that are processed in analog or digital form and the voltage signals are compared to thresholds and ranges.

Based on the comparison analysis at 318, the audio output from the speaker 128 is adjusted at 320. For example, the processor may change the loudness level or a frequency response or both loudness level and frequency response based on the comparison analysis.

Referring again to the signal analysis at 318, for example, signals generated by the audio leak microphone 120 are utilized to detect when the output of speaker 128 exceeds a high threshold of sound pressure that is considered to be a safe or acceptable level. For example, a threshold of about 118 dBA may be utilized as a safety threshold. Sound pressure detected by the audio leak microphone 120 that is above a high threshold, such as a threshold of about 118 dBA, is deemed to be an unacceptable condition. The detected sound pressure may be an average or a peak value.

In response to determining that the detected sound pressure is above the high threshold, the output of speaker 128 is adjusted at 320 to decrease the sound pressure produced by speaker 128. The reduction may be achieved by reducing the loudness level or adjusting the frequency response or both.

According to another example, when the signal generated by the audio leak microphone 120 falls below the high threshold and above a low threshold, the detected sound is considered to be within an acceptable level. The signals provided to speaker 128 may optionally be modified to adjust the output of the speaker 128 while still providing levels of sound pressure that are considered safe. The adjustments may be made to enhance the sound quality or the listening levels.

According to another example, signals generated by audio leak microphone 120 are determined to be below a low threshold and therefore may be weak or may not be audibly "detectable" by the user. In response to determining that the signals generated by the audio leak microphone 120 are below the low threshold, the output of speaker 128 is adjusted to boost the sound pressure produced by speaker 128. The boost may be achieved by increasing the loudness level or adjusting the frequency response or both.

The output from the speaker 128 is adjusted based on the signals generated by the audio leak microphone. For example, the processor may utilize a lookup table to identify a loudness level or a frequency response or both loudness level and frequency response. The frequency response may be selected, modified or adjusted by changing filter coefficients in the audio digital signal processor (DSP). For example, the processor 102 may select from a plurality of filter coefficients corresponding to a frequency responses based on the information from the touch data, including distance and magnitude of signal. Such selection may be made, for example, utilizing the lookup table.

The scope of the claims should not be limited by the embodiments set forth in the examples, but should be given the broadest interpretation consistent with the description as a whole.

## Claims

1. A method of controlling audio output from a portable electronic device having a touch-sensitive display, the method comprising:
detecting a touch on the touch-sensitive display when the portable electronic device is in an audio output mode in which audio is output through a speaker of the portable electronic device;
identifying a location of the touch and magnitude of touch signals utilizing signals received from touch sensors of the touch-sensitive display during detecting the touch;
based on the identified location and magnitude of the touch signals, adjusting audio output from the speaker.

2. The method according to claim 1, wherein adjusting audio output comprises adjusting a loudness level of audio output from the speaker.

3. The method according to claim 1 or 2, wherein adjusting audio output comprises adjusting a frequency response of audio output from the speaker.

4. The method according to any preceding claim, comprising identifying an orientation of the touch utilizing the signals received from touch sensors of the touch-sensitive display during detecting the touch, wherein the orientation and location are utilized to estimate a distance of the speaker from a center of the ear.

5. The method according to any preceding claim, wherein the location of the touch and an orientation of the touch are identified based on a shape of the touch.

6. The method according to any preceding claim, wherein the magnitude of the touch signals is a value representative of the magnitudes of the touch signals associated with a plurality of nodes of the touch-sensitive display.

7. The method according to any preceding claim, wherein the audio output is maintained until a change is detected by the touch-sensitive display.

8. The method according to claim 7, wherein the audio output is adjusted in response to determining a change in location or magnitude of the touch signals.

9. The method according to any preceding claim, wherein the location of the touch and the magnitude of the touch signals are utilized in conjunction with an audio leak microphone to adjust the audio output.

10. A computer program which when executed on an electronic device is configured to carry out the method of any preceding claim.

11. A portable electronic device comprising:
a touch-sensitive display including a plurality of touch sensors and a processor coupled to the touch-sensitive display, the device configured to carry out the method of any one of claims 1 to 9.

12. The portable electronic device according to claim 11, comprising an audio leak microphone that is utilized in conjunction with a location and magnitude of the touch signals to adjust the audio output.
